# EUROPEAN PATENT SPECIFICATION

(11) **EP 2 176 343 B1**
(45) Date of publication and mention of the grant of the patent: **16.02.2011**
(21) Application number: 08786232.2
(22) Date of filing: 18.07.2008
(51) Int. Cl.: C08L 27/06

(54) **CARBOXY-MODIFIED POLYVINYL ALCOHOL AS CO-STABILIZER FOR PVC**
CARBOXYMODIFIZIERTER POLYVINYLALKOHOL ALS COSTABILISATOR FÜR PVC
ALCOOL POLYVINYLIQUE MODIFIÉ PAR DES GROUPES CARBOXY COMME CO-STABILISANT POUR DU PVC

(30) Priority: 19.07.2007 DE 102007033971
(43) Date of publication of application: 21.04.2010
(73) Proprietor: Kuraray Co., Ltd., Kurashiki-shi Okayama 710-0801 (JP)
(72) Inventor: MICHEL, Samuel, 65719 Hofheim a Ts (DE); FUSS, Robert W., 65835 Liederbach (DE); KATO, Masaki, Okayama 710-0801 (JP); NAKAMAE, Masato, Okayama 710-0801 (JP); TSUBOI, Akira, Okayama 710-0801 (JP)
(74) Representative: Kisters, Michael Marcus
(86) International application number: PCT/EP2008/059432
(87) International publication number: WO 2009/010578

(56) References cited:
- EP-A- 1 174 444
- US-A- 4 963 608
- US-A- 5 145 909
- DATABASE WPI Week 197916 Thomson Scientific, London, GB; AN 1979-30895B XP002505140 & JP 54 033580 A (ELECTRO CHEM IND KK) 12 March 1979 (1979-03-12)

## Description

### Field of the invention

The present invention relates to thermoplastic processable mixtures based on polyvinyl chloride (PVC) which are stabilized with at least one metal ion in combination with carboxyl-modified polyvinyl alcohol.

### Background

Thermoplastic processable mixtures based on PVC have to be stabilized against heat and/or UV-radiation in order to reduce chemical decomposition. Especially useful for this purpose are metal ions, for example lead or tin salts or the more eco-friendly calcium or zinc compounds. The metal based stabilizers should have a good dispersibility within the polymer matrix without showing agglomeration or incompatibility during the thermoplastic processing of the PVC-mixture. Furthermore, the stabilizers should not migrate to the surface of the processed material in order to prevent so called "plate-out" or "fish eye" disturbances. Therefore, most stabilizers for PVC contain a plurality of components like polyols, beta diketones, phenolic compounds or inorganic stabilizers. See, for example US 5,143,959.

The use of polyvinyl alcohol (PVA) in metal-based stabilizer mixtures for PVC is known. For example, US 5,118,741 discloses the use of partially hydrolyzed PVA during suspension polymerization of PVC in an amount of 0,5 phr at most and the stabilization of the obtained PVC-mixtures with metal ions. A co-stabilizing effect of the PVA is not mentioned in this publication. Furthermore, the amounts of PVA added are too low to expect any co-stabilizing effect.

DE 272 8 862 discloses a mixture of PVC, and Ca/Zn salts of a β-diketone with PVA as polyol compound without giving any details of the PVA used.

The thermal stability of PVC-mixtures containing PVA as co-stabilizer was further analysed by Ikeda et al. al. in "Polymers and Polymer Composites", p 649 to 662, vol. 11 no. 8, 2003. This paper shows that non-modified PVA is a suitable co-stabilizer for Zn-stabilized PVC mixtures.

The known PVA-containing stabilizer mixtures for PVC still have deficiencies in view of thermal stability and/or processability during the extrusion of PVC-mixtures.

Surprisingly, it was found that metal ions in combination with polyvinyl alcohols comprising carboxyl groups improve the thermal stability of PVC mixtures and show sufficient compatibility with the polymer matrix.

Without being bound to theory it is assumed that the modified polyvinyl alcohols act as a complex builder for the metal ions.

Therefore, one aspect of the invention are thermoplastic processable mixtures based on polyvinyl chloride comprising at least one metal ion as stabilizer, characterized by the addition of 0,1 to 15 parts per 100 parts of polyvinyl chloride of at least one modified polyvinyl alcohol, obtained by copolymerization of at least on vinyl ester and at least one olefinically unsaturated carboxylic acid or the metal salt, anhydride or ester thereof and subsequent partial saponification of the copolymer.

The modified polyvinyl alcohol may comprise 0.01 - 5 mol % of at least one olefinically unsaturated carboxylic acid or its derivative.

Suitable olefinically unsaturated carboxylic acids comprise 3 to 20 carbon atoms and may have one or two carboxylic groups. The following derivates can be employed for the production of a modified PVA useful in the present invention:
- alkaline or earth alkaline metal salt
- intermolecular or intramolecular anhydride
- mono- or diester with an alcohol comprising 1 to 20 carbon atoms

By way of example, the modified polyvinyl alcohol may comprise the following repeating units:

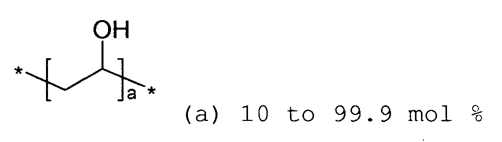

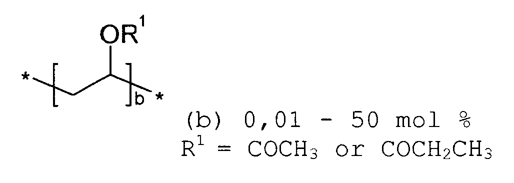

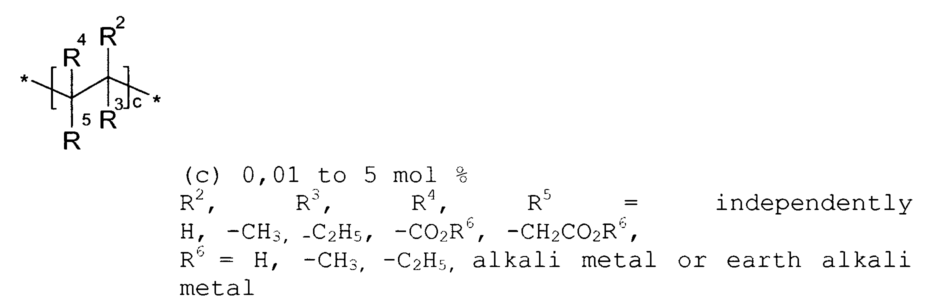

With the provisio that at least one residue R², R³, R⁴, R⁵ contains a carboxylic group

Preferable, the modified polyvinyl alcohol is obtained by copolymerization of vinyl ester like vinyl acetate with at least one monomer selected from the group itaconic acid (R² = CO₂H, R³ = CH₂CO₂H, R⁴, R⁵ = H), fumaric acid (R² , R⁵ = CO₂H; R³ , R⁴ = H), maleic acid (R², R⁴= CO₂H; R³, R⁵ = H), crotonic acid (R²= CO₂H; R³, R⁴ = H; R⁵ =CH₃), citraconic acid (R², R⁴= CO₂H; R³ = H; R⁴ =CH₃), acrylic acid (R² = CO₂H; R³, R⁴, R⁵ = H), methacrylic acid (R² = CO₂H; R³ =CH₃; R⁴, R⁵ = H), and/or the corresponding methyl esters, ethyl esters, alkali metal salts or earth alkali metal salts, and subsequent saponification of the copolymer. The copolymerization of said monomers and the hydrolysation conditions are known to the person skilled in PVA chemistry (see, for example JP57-119902).

During copolymerisation, many different orientations of the monomers in the polymer backbone may occur. For sake of clarity, the isomers or stereoisomers were omitted in above formula, but are still within the scope of the invention.

Preferable, the modified polyvinyl alcohols used in the invention do not contain repeating units (c) derived from acrylic or methacrylic acid.

The carboxylic acid groups of repeating unit c may react with adjacent hydroxyl groups to form a respective lactone. This reaction depends on the pH conditions during the saponification conditions, the mixing conditions during the manufacture of the thermoplastic processable mixtures and the compositions thereof. The amount of lactone rings in the modified polyvinyl alcohol does not influence the co stabilizing effect in the PVC mixture.

The modified polyvinyl alcohol may have a degree of hydrolysation (saponification) of at least 60 mol%, preferable 60 to 95 mol% and especially 70 to 85 mol%, based on the original amount of vinyl acetate units.

The degree of polymerization is preferable between 200 and 1500, preferable between 400 and 800.

The mixtures according to the invention contain preferably 0,1 to 5 parts polyvinyl alcohol per 100 parts PVC. Preferably 0,1 to 1 phr, preferably 0,1 to 0,5 phr.

Stabilizer according to the invention is at least one metal ion selected from the group barium, zinc, calcium or tin, especially in the form of the respective organic or inorganic salts. Preferable "metal soaps", i.e. salts of carbon acids comprising 1 to 25 carbon atoms, especially stearates, laureates, maleates, oleates, or terephthalates or metal salts of acetyl acetonate, mercaptane or β-diketones are used.

Especially useful is a stabilizer mixture derived from zinc and calcium salts, preferably the respective salts of β-diketones, acetyl acetone or carboxylic acids comprising 1 to 25 carbon atoms, preferable in a mixture of 1:1 to 1:4, especially 1:2 parts.

Furthermore, in PVC industry commonly used filling materials for example selected from the group consisting of TiO₂, CaCO₃, ZrO₂, Kaolin, Talcum, K/Al silicates, feldspar, silicate, barium sulphate, metal powder, graphite, calcium sulphate, ceramic and glass particles or wood may be added to the thermoplastic mixture in about 5 to 20 parts per hundred parts of polyvinyl chloride.

The addition of common plasticizers known to the PVC processing industry like dioctyl phthalate, diisononyl phthalate, or their hydrated derivates, dioctyl terephthalates, alkyladipates, alkybenzoates, epoxidised alkyl ester or epoxidised vegetable oils like epoxidised soybean or linseed oil, each in 0,1 to 100 parts per 100 parts PVC is possible.

In the case of plasticizers like epoxidised soybean oil which are also contributing to the thermal stabilisation of the PVC, lower concentration may be employed and it will be added in amounts of about 0,01 to 10 phr of PVC.

Another object of the invention is a process for manufacture of thermoplastic processable mixture based on polyvinyl chloride comprising at least one metal ion as stabilizer comprising 0,1 to 15 parts per 100 parts of polyvinyl chloride of at least one modified polyvinyl alcohol, obtained by copolymerization of at least on vinyl ester and at least one olefinically unsaturated carboxylic acid or the metal salt, anhydride or ester thereof and subsequent partial saponification of the copolymer by mixing the components at a temperature of at least 120 °C for example in an extruder or a kneader.

Preferably, the mixing may be performed prior to or during a thermoplastic form shaping process at about 180 to 240 °C.

The optional thermoplastic form shaping process is usually performed with or in an extruder or calender for example by first melting the components during feeding process at said temperatures and afterwards form shaping the mixture at elevated pressure.

The PVA can be added to the PVC as a powder or in form of a solution. This PVA solution can be prepared with water or with any suitable organic solvent (for example ethanol) or any mixture thereof. The metal salts can be added as dry blend or also in form of a solution. Alternatively, all additives can be added alone or together (as "one pack formulation") to the PVC as dry blend, for example in an extruder, dry mill or kneader.

The use of said polymer comprising the repeating units a) - e) as co-stabilizer in thermoplastic processable mixtures based on PVC containing at least on metal ion as stabilizer is further an object of the present invention.

Depending on the intended use of the thermoplastic mixture, different metal ions in different concentrations may be used.

Typically, PVC mixtures for bottles, tubes or profiles may contain 0,3 to 3 phr tin ions. For flexible PVC mixtures, like plastisoles Ba- and Zn-ions in a total amount of 1 to 3 phr are used. Ca/ZN mixtures in a total amount of 2-3.5 phr are used for floor coverings. Such mixtures and the amounts of metal ions are known in the PVC industry. In cases where epoxidised vegetable oils are employed it may even possible to reduce the amount of PVA and metal ions according to the invention without impairing thermal stabilization.

Thermoplastic processable mixtures according to the invention are especially useful for the production of window or door profiles, films, coatings, sheets, tubes, cables, floorings, bottles, or floor coverings.

### Example

Samples comprising the components according to table 1 were prepared by the following steps:
- 1% of PVA was dissolved in water.
- PVC was added to the solution, and then dried at 50°C for 8 hrs
- To the PVC/PVA mixture, DOP (Dioctyl phthalate), Zn-stearate and Ca-stearate were added and dry blended
- 60 g of the resulting mixture was milled using an open roll at 160°C for 5 min.

The obtained mixtures were pressed into sheets of 50 x 70 mm with a thickness of about 0,45 mm. The sheets were then heated to 180 °C in an oven and the whiteness of the heated sheets was measured the room temperature using a colorimeter. The whiteness values show the co-stabilizing effect of the polyvinyl alcohol used.

A differential colorimeter (Model SM-T-H1 colour computer, Suga Shikenki Co., Ltd) with SC-T(P),SM-T(P),ver8.00 software, mounting a specimen holder window 30 mm in diameter was used to measure the whiteness level.

**Table 1**

| | |
|---|---|
| PVC (Shin-Etsu TK1000) | 100 phr |
| DOP | 20 phr |
| Zn stearate (Zn-st) | 2 phr |
| Ca stearate (Ca-st) | 1 phr |
| PVA (co-stabilizer) | 1 phr |

**Table 2**

| Heating time[min] | 0 | 30 | 45 | 60 | 90 | 105 | 120 | 135 |
|---|---|---|---|---|---|---|---|---|
| | Whiteness values | | | | | | | |
| Ex 1 | 92,6 | 92,6 | 92,6 | 85,7 | 83,3 | 84,6 | 23,4 | 20,8 |
| Comp. Ex | 92,3 | 91,2 | 89,5 | 87,1 | 82,8 | 61,4 | 0 | 0 |

The PVA were produced as follows:

### Example-1: Preparation of carboxyl group modified polyvinyl alcohol

Vinyl acetate (1200 parts), methanol (1800 parts), 20wt% of Itaconic acid (IA) methanol solution (3 parts) and azobisisobutyronitrile (1.5 parts) were fed into a polymerization vessel equipped with a reflux condenser and an agitator. 20wt% of IA methanol solution was added continuously at a rate of 15 mL/hr. Polymerization was conducted for 4.5 hours (polymerization conversion 65%) while stirring under a nitrogen stream at 60°C. Unreacted vinyl acetate was removed to give a methanol solution (resin content 40%) of the polymer. This solution was fed into a reactor. Sodium hydroxide (5 mmol per vinyl acetate unit in the polymer) was added thereto to conduct hydrolysis at 40°C. Generated polyvinyl alcohol gel was milled and washed thoroughly with methanol and dried in a hot air dryer to give IA modified polyvinyl alcohol resin.

Degree of hydrolysis and degree of polymerization were measured in the same manner as described at JIS K6726. Degree of hydrolysis was 74 mol%. Degree of polymerization was 550. Degree of IA modification was measured by 1H-NMR. Degree of IA modification was 1 mol%. The PVA has the following composition with regard to the repeating units a)-c):
74 mol% of unit a), 26 mol% of unit b) 1 mol% of unit c) (R² = CO₂H R³ = CH₂CO₂H, R⁴, R⁵ = H).

### Comparative Example: Preparation of unmodified polyvinyl alcohol

Vinyl acetate (1200 parts), methanol (1800 parts) and azobisisobutyronitrile (1.5 parts) were fed into a polymerization vessel equipped with a reflux condenser and an agitator. Polymerization was conducted for 4.5 hours (polymerization conversion 65%) while stirring under a nitrogen stream at 60°C. Unreacted vinyl acetate was removed to give a methanol solution (resin content 40%) of the polymer. This solution was fed into a reactor. Sodium hydroxide (5 mmol per vinyl acetate unit in the polymer) was added thereto to conduct hydrolysis at 40°C. Generated polyvinyl alcohol gel was milled and washed thoroughly with methanol and dried in a hot air dryer to give polyvinyl alcohol resin.

Degree of hydrolysis and degree of polymerization were measured in the same manner as described at JIS K6726. Degree of hydrolysis was 74 mol%. Degree of polymerization was 550.

As can be seen from table 2, modified polyvinyl alcohol according to the invention has an improved stabilizing effect as compared to non-modified polyvinyl alcohols.

## Claims

1. Thermoplastic processable mixture based on polyvinyl chloride comprising at least one metal ion as stabilizer, **characterized by** the addition of 0,1 to 15 parts per 100 parts of polyvinyl chloride of at least one modified polyvinyl alcohol, obtained by copolymerization of at least on vinyl ester and at least one olefinically unsaturated carboxylic acid or the metal salt, anhydride or ester thereof and subsequent partial saponification of the copolymer.

2. Thermoplastic processable mixture according to claim 1, **characterized in that** the modified polyvinyl alcohol comprises 0.01 - 5 mol % at least one olefinically unsaturated carboxylic acid or the metal salt, anhydride or ester thereof.

3. Thermoplastic processable mixture according to claim 1 or 2, **characterized in that** the modified polyvinyl alcohol comprises 0.01 - 5 mol % at least one olefinically unsaturated carboxylic acid with 3 to 20 carbon atoms, the alkaline or earth alkaline metal salt, the anhydride or an ester with a alcohol comprising 1 to 20 carbon atoms thereof.

4. Thermoplastic processable mixture according to claim 1 or 3, **characterized in that** the modified polyvinyl alcohol is obtained by copolymerization of vinyl acetate with at least one monomer selected from the group itaconic acid, fumaric acid, maleic acid, crotonic acid, citraconic acid, acrylic acid, methacrylic acid, and corresponding esters and metal salts, and subsequent saponification.

5. Thermoplastic processable mixture according to one of the claims 1 to 4, **characterized in that** the modified polyvinyl alcohol has a degree of saponification of at least 60 Mol%.

6. Thermoplastic processable mixture according to one of the claims 1 to 5, **characterized in that** the modified polyvinyl alcohol has a degree of polymerization of 200 to 1500.

7. Thermoplastic processable mixture according to one of the claims 1 to 6, **characterized in that** as stabilizer at least one metal ion selected from the group barium, zinc, calcium or tin is used.

8. Thermoplastic processable mixture according to one of the claims 1 to 7, **characterized in that** as stabilizer a mixture of zinc and calcium salts of a carboxylic acid comprising 1 to 25 carbon atoms, acetyl acetone or β-diketone is used.

9. Thermoplastic processable mixture according to one of the claims 1 to 8, **characterized in that** the mixture contains 5 to 20 parts per 100 parts of polyvinyl chloride of a filler material selected from the group consisting of TiO₂, CaCO₃, ZrO₂, kaolin, talcum, K/Al silicates, feldspar, silicate, barium sulphate, metal powder, graphite, calcium sulphate, ceramic and glass particles or wood.

10. Process for the production of the thermoplastic processable mixtures according to one of the claims 1 to 9 by mixing the components at a temperature of least 120 °C.

11. Process according to claim 10 **characterized in that** the mixing is obtained during thermoplastic form shaping process at 180 to 240 °C.

## Patentansprüche

1. Thermoplastische verarbeitbare Mischung auf Basis von Polyvinylchlorid, umfassend mindestens ein Metallion als Stabilisator, **gekennzeichnet durch** die Zugabe von 0,1 bis 15 Teilen pro 100 Teile Polyvinylchlorid von mindestens einem modifizierten Polyvinylalkohol, erhalten **durch** Copolymerisation von mindestens einem Vinylester und mindestens einer olefinisch ungesättigten Carbonsäure oder dem Metallsalz, Anhydrid oder Ester davon und die anschließende teilweise Verseifung des Copolymers.

2. Thermoplastische verarbeitbare Mischung gemäß Anspruch 1, **dadurch gekennzeichnet, dass** der modifizierte Polyvinylalkohol 0,01 - 5 Mol-% von mindestens einer olefinisch ungesättigten Carbonsäure oder dem Metallsalz, Anhydrid oder Ester davon umfasst.

3. Thermoplastische verarbeitbare Mischung gemäß Anspruch 1 oder 2, **dadurch gekennzeichnet, dass** der modifizierte Polyvinylalkohol 0,01 - 5 Mol-% von mindestens einer olefinisch ungesättigten Carbonsäure mit 3 bis 20 Kohlenstoffatomen, dem Alkali- oder Erdalkalimetallsalz, dem Anhydrid oder einem Ester mit einem 1 bis 20 Kohlenstoffatome umfassenden Alkohol davon umfasst.

4. Thermoplastische verarbeitbare Mischung gemäß Anspruch 1 oder 3, **dadurch gekennzeichnet, dass** der modifizierte Polyvinylalkohol durch Copolymerisation von Vinylacetat mit mindestens einem Monomer, das aus der Gruppe von Itaconsäure, Fumarsäure, Maleinsäure, Krotonsäure, Citraconsäure, Acrylsäure, Methacrylsäure und entsprechenden Estern und Metallsalzen ausgewählt ist, und anschließende Verseifung erhalten wird.

5. Thermoplastische verarbeitbare Mischung gemäß einem der Ansprüche 1 bis 4, **dadurch gekennzeichnet, dass** der modifizierte Polyvinylalkohol einen Verseifungsgrad von mindestens 60 Mol-% aufweist.

6. Thermoplastische verarbeitbare Mischung gemäß einem der Ansprüche 1 bis 5, **dadurch gekennzeichnet, dass** der modifizierte Polyvinylalkohol einen Polymerisationsgrad von 200 bis 1500 aufweist.

7. Thermoplastische verarbeitbare Mischung gemäß einem der Ansprüche 1 bis 6, **dadurch gekennzeichnet, dass** als Stabilisator mindestens ein Metallion, ausgewählt aus der Gruppe Barium, Zink, Calcium oder Zinn, verwendet wird.

8. Thermoplastische verarbeitbare Mischung gemäß einem der Ansprüche 1 bis 7, **dadurch gekennzeichnet, dass** als Stabilisator eine Mischung von Zink- und Calciumsalzen einer Carbonsäure, umfassend 1 bis 25 Kohlenstoffatome, Acetylaceton oder β-diketon verwendet wird.

9. Thermoplastische verarbeitbare Mischung gemäß einem der Ansprüche 1 bis 8, **dadurch gekennzeichnet, dass** die Mischung 5 bis 20 Teile pro 100 Teile Polyvinylchlorid eines Füllstoffmaterials enthält, das aus der Gruppe ausgewählt ist, die aus TiO₂, CaCO₃, ZrO₂, Kaolin, Talk, K/Al-Silikaten, Feldspat, Silikat, Bariumsulfat, Metallpulver, Graphit, Calciumsulfat, Keramik- und Glaspartikeln oder Holz besteht.

10. Verfahren für die Herstellung der thermoplastischen verarbeitbaren Mischungen gemäß einem der Ansprüche 1 bis 9 durch Mischen der Komponenten bei einer Temperatur von mindestens 120°C.

11. Verfahren gemäß Anspruch 10 **dadurch gekennzeichnet, dass** das Mischen durch thermoplastische Formgebung bei 180 bis 240°C erfolgt.

## Revendications

1. Mélange transformable thermoplastique à base de poly(chlorure de vinyle) comprenant au moins un ion métallique en tant que stabilisant, **caractérisé par** l'addition de 0,1 à 15 parties pour 100 parties de poly(chlorure de vinyle) d'au moins un poly(alcool vinylique) modifié, obtenu par copolymérisation d'au moins un ester vinylique et d'au moins un acide carboxylique à insaturation oléfinique ou son sel métallique, anhydride ou ester, suivie de la saponification partielle du copolymère.

2. Mélange transformable thermoplastique selon la revendication 1, **caractérisé en ce que** le poly(alcool vinylique) modifié comprend 0,01 - 5 % en moles d'au moins un acide carboxylique à insaturation oléfinique ou de son sel métallique, anhydride ou ester.

3. Mélange transformable thermoplastique selon la revendication 1 ou 2, **caractérisé en ce que** le poly(alcool vinylique) modifié comprend 0,01 - 5 % en moles d'au moins un acide carboxylique à insaturation oléfinique comportant 3 à 20 atomes de carbone, son sel métallique alcalin ou alcalino-terreux, anhydride ou ester avec un alcool comprenant 1 à 20 atomes de carbone.

4. Mélange transformable thermoplastique selon la revendication 1 ou 3, **caractérisé en ce que** le poly(alcool vinylique) modifié est obtenu par copolymérisation d'acétate de vinyle avec au moins un monomère choisi dans le groupe de l'acide itaconique, l'acide fumarique, l'acide maléique, l'acide crotonique, l'acide citraconique, l'acide acrylique, l'acide méthacrylique et les esters et sels métalliques correspondants, suivie d'une saponification.

5. Mélange transformable thermoplastique selon l'une quelconque des revendications 1 à 4, **caractérisé en ce que** le poly(alcool vinylique) modifié possède un degré de saponification d'au moins 60 % en moles.

6. Mélange transformable thermoplastique selon l'une quelconque des revendications 1 à 5, **caractérisé en ce que** le poly(alcool vinylique) modifié possède un degré de polymérisation de 200 à 1500.

7. Mélange transformable thermoplastique selon l'une quelconque des revendications 1 à 6, **caractérisé en ce que** l'on utilise, en tant que stabilisant, au moins un ion métallique choisi dans le groupe du baryum, du zinc, du calcium ou de l'étain.

8. Mélange transformable thermoplastique selon l'une quelconque des revendications 1 à 7, **caractérisé en ce que** l'on utilise, en tant que stabilisant, un mélange de sels de zinc et de calcium d'un acide carboxylique comprenant 1 à 25 atomes de carbone, de l'acétylacétone ou de la ß-dicétone.

9. Mélange transformable thermoplastique selon l'une quelconque des revendications 1 à 8, **caractérisé en ce que** le mélange contient 5 à 20 parties pour 100 parties de poly(chlorure de vinyle) d'un matériau de charge choisi dans le groupe constitué par TiO₂, CaCO₃, ZrO₂, le kaolin, le talc, les silicates de K/Al, le feldspath, le silicate, le sulfate de baryum, la poudre de métal, le graphite, le sulfate de calcium, les particules céramique et de verre ou le bois.

10. Procédé de production des mélanges transformables thermoplastiques selon l'une quelconque des revendications 1 à 9 consistant à mélanger les constituants à une température d'au moins 120 °C.

11. Procédé selon la revendication 10, **caractérisé par** le melange obtenu pendant le processus de la transformation thermoplastique entre 180 et 240°C.
